Europäisches Patentamt

European Patent Office

Office européen des brevets

(11) Veröffentlichungsnummer: **0 182 072**
A2

# (12) EUROPÄISCHE PATENTANMELDUNG

(21) Anmeldenummer: 85112821.5

(22) Anmeldetag: 10.10.85

(51) Int. Cl.⁴: **B 60 N 1/08**

(30) Priorität: 18.10.84 DE 3438228

(43) Veröffentlichungstag der Anmeldung: 28.05.86
Patentblatt 86/22

(84) Benannte Vertragsstaaten: **DE FR GB**

(71) Anmelder: **C. Rob. Hammerstein GmbH,
Postfach 13 01 18 Merscheiderstrasse 167,
D-5650 Solingen 13 (DE)**

(72) Erfinder: **Bauer, Heinz, Hammerstrasse 9,
D-5650 Solingen 11 (DE)**
Erfinder: **Becker, Burckhard, Dipl.-Ing.,
Obenkatternweg 25, D-5650 Solingen 1 (DE)**
Erfinder: **Frohnhaus, Ernst-Reiner, Hammerstrasse 13,
D-5650 Solingen 11 (DE)**
Erfinder: **Gedig, Alfred, Dipl.-Ing., Hammerstrasse 28,
D-5650 Solingen 11 (DE)**

(74) Vertreter: **Bauer, Wulf, Dr., Wolfgang-Müller-Strasse 12,
D-5000 Köln 51 (Marienburg) (DE)**

(54) **Längsführung für Fahrzeugsitze mit mindestens einem Führungskanal.**

(57) Die Längsführung für Fahrzeugsitze hat in bekannter Weise eine Außenschiene (20) und eine Innenschiene (22), die zwischen sich in Verschieberichtung verlaufende Längskanäle (24, 25) ausbilden, in denen Führungsmittel (26, 28), vorzugsweise Wälzkörper, angeordnet sind, über die sich die beiden Schienen (20, 22) gegeneinander abstützen.

In mindestens einem Längskanal (24, 25) ist eine Reinigungsvorrichtung (30) angeordnet, die in Längsrichtung dieses Längskanals (24, 25) verschiebbar in diesem untergebracht ist, mit den Führungsmitteln (26, 28) bewegungsverbunden ist, dem Innenprofil des Längskanals (24, 25) formmäßig angepaßt ist und die an mindestens einer Führungsfläche (40, 42) vorzugsweise an beiden Führungsflächen (40, 42) des Längskanals (24, 25) elastisch anliegt.

- ⁄ -

Anmelder:    Firma C. Rob. Hammerstein GmbH in
             5650 Solingen 13

Bezeichnung: Längsführung für Fahrzeugsitze mit mindestens
             einem Führungskanal

---

Die Erfindung bezieht sich auf eine Längsführung für Fahrzeugsitze mit einer Außenschiene und einer in dieser verschiebbar geführten Innenschiene, die zwischen sich in Verschieberichtung verlaufende Längskanäle ausbilden, in denen Führungsmittel, vorzugsweise Wälzkörper, angeordnet sind, die an Führungsflächen des Längskanals anliegen und über die sich die beiden Schienen gegeneinander abstützen.

Derartige Längsführungen sind in vielfältigen Ausführungen mit unterschiedlichen Profilen der beiden Schienen bekannt. Die Außenschiene umgreift zumindest bereichsweise die Innenschiene, im allgemeinen mit einer gewissen Vorspannung. Dadurch liegen die in den Längskanälen befindlichen Führungsmittel klapperfrei an den jeweiligen Führungsflächen des zugehörigen Längskanals an.

Bei einer Verschiebung der beiden Schienen gegeneinander findet eine Relativbewegung der Führungsmittel statt. Bei der bevorzugten Ausführungsform der Führungsmittel als Wälzkörper, also insbesondere Kugeln oder Rollen, wälzen sich die Wälzkörper an jeder der beiden Führungsflächen ab. Wälzkörper bewegen sich bei einer Längsverschiebung der Schienen gegeneinander relativ zu beiden Schienen. Sind die Führungsmittel jedoch als Gleitkörper ausgebildet, so

- 5 -

- 5 -

findet im allgemeinen nur eine Bewegung dieser Gleitkörper relativ zu einer Schiene statt, da die Gleitkörper häufig an der anderen Schiene festgelegt sind.

Diese Relativbewegung zwischen Führungsmitteln und mindestens einer Schiene führt zwangsläufig zu einem gewissen Abrieb. Von den Führungsflächen oder auch sonstigen Flächen des Längskanals und auch von den Führungsmitteln werden Partikelchen abgelöst, die sich in den Längskanälen ansammeln, teilweise aus diesen herausfallen und den Fahrzeugboden verschmutzen oder das Laufverhalten der Längsführung beeinträchtigen. Zudem ist nicht auszuschließen, daß Schmutzpartikelchen von außen, beispielsweise in Form von Staub, in den Längskanal gelangen und dort entweder die Verschiebefunktion beeinträchtigen oder nach Kontakt mit dem im Längskanal befindlichen Fett aus diesem herausfallen und den Fahrzeugboden verschmutzen.

Die beschriebene mechanische Abnutzung tritt bei Wälzkörpern, beispielsweise Kugeln, üblicherweise an jeder Laufschiene auf, da die spezifische Belastung im Berührungsbereich zwischen Wälzkörper und Führungsfläche der jeweiligen Schiene in Nähe der Streckgrenze des Schienenmaterials liegt. Die Oberfläche der Wälzkörper ist üblicherweise gehärtet und damit härter als die Oberfläche der Führungsflächen, die Wälzkörper prägen Laufrillen in die Führungsflächen ein. Hierbei können Teilchen des Schienenmaterials, beispielsweise Stahl oder Aluminium, abplatzen oder abgetragen werden, die durch das in den Längskanälen vorhandene Fett haften und die Führungsflächen beeinträchtigen. Das abgetragene Material wird erfahrungsgemäß nicht wieder eingewalzt.

- 6 -

8. Längsführung nach einem der Ansprüche 1 bis 7, dadurch gekennzeichnet, daß die Reinigungsvorrichtung (30) zwei gegenständige Reinigungsbereiche (34) aufweist, deren Reinigungskanten nach innen zeigen und daß sich zwischen diesen Reinigungsbereichen (34) eine Kammer (50) befindet.

9. Längsführung nach Anspruch 8, dadurch gekennzeichnet, daß die freie Länge zwischen den beiden Reinigungsbereichen (34) größer ist als der maximale Verschiebeweg der Reinigungsvorrichtung (30).

10. Längsführung nach einem der Ansprüche 5 bis 9, dadurch gekennzeichnet, daß die Anlagefläche (46) Lippen (52) aufweist, die wie die Lippen (36) ausgebildet sind und Schmutz von Wälzkörpern (26, 28) abstreifen, wobei vorzugsweise zwischen den Lippen (52) ein Hohlraum (54) ausgebildet ist.

Käfig für die Wälzköper, wenn die Reinigungsvorrichtung an ihren beiden Endbereichen mit Anlageflächen ausgestattet ist. Auf diese Weise bewirkt die Reinigungsvorrichtung zugleich einen konstanten Abstand zwischen den Wälzkörpern. Ebenso kann an der Reinigungsvorrichtung eine Anschlagfläche für einen ortsfesten Anschlag einer Schiene vorgesehen sein, wodurch die Wälzkörper bei einer Verschiebung der Schienen der Längsführung jeweils wieder an ihren richtigen Ort geschoben werden.

Weitere Vorteile und Merkmale der Erfindung ergeben sich aus den übrigen Ansprüchen sowie der nun folgenden Beschreibung mehrerer, nicht einschränkend zu verstehender Ausführungsbeispiele der Erfindung, die unter Bezugnahme auf die Zeichnung im folgenden näher erläutert werden. In dieser zeigen:

Fig. 1     eine perspektivische Darstellung einer (verkürzt dargestellten) Längsführung für Fahrzeugsitze mit zwei gestrichelt eingezeichneten Reinigungsvorrichtungen, die sich in Längskanälen befinden,

Fig. 2     eine perspektivische Darstellung der Reinigungsvorrichtung des Innenkanals gemäß Figur 1,

Fig. 3     eine perspektivische Darstellung der Reinigungsvorrichtung eines Außenkanals gemäß Figur 1,

Fig. 4     eine Seitenansicht einer Reinigungsvorrichtung mit einer innen liegenden Kammer,

Fig. 5     eine Darstellung einer Reinigungsvorrichtung ähnlich Figur 4, jedoch in veränderter Ausführung,

Fig. 6     eine Seitenansicht zweier Reinigungsvorrichtungen und zweier Kugeln innerhalb eines Längskanals, und

Fig. 7     eine Darstellung ähnlich Figur 6, jedoch für eine Kugel und eine Reinigungsvorrichtung.

- 8 -
6

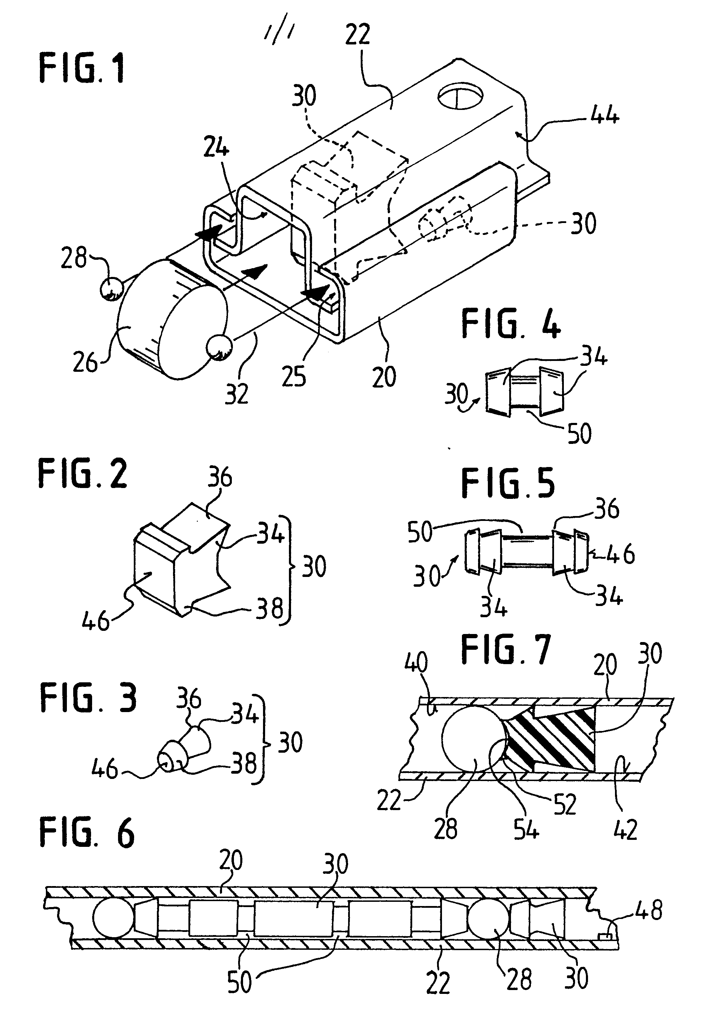

Die in Figur 1 gezeigte Längsvorrichtung für Fahrzeugsitze hat eine Außenschiene 20 und eine Innenschiene 22, die zwischen sich insgesamt drei in Verschieberichtung (Längsrichtung der Schienen 20, 22) verlaufende Längskanäle 24, 25 · ausbilden. Mit 24 ist ein innerer, relativ großer Längskanal bezeichnet, in dem als Rollen relativ großen Durchmessers ausgebildete Führungsmittel 26 abrollen. Seitlich hierzu sind zwei äußere Längskanäle 25 vorgesehen, in denen als Kugeln ausgebildete Führungsmittel 28 untergebracht sind. Die beiden Schienen 20, 22 stehen nicht unmittelbar, sondern über die Führungsmittel 26, 28 in Verbindung, sie stützen sich gegeneinander über diese Führungsmittel 26, 28 ab.

Die gezeigte Längsführung ist lediglich ein Beispiel für die im folgenden zu erläuternde Erfindung, es können auch andere Längsführungen beliebiger Bauart benutzt werden, sofern Längskanäle 24, 25 vorhanden sind, in denen sich körperhafte Führungsmittel 26, 28 befinden, so daß körperhafte Reinigungsvorrichtungen 30, wie sie im folgenden im einzelnen beschrieben werden, in diesen Kanälen angeordnet werden können.

In dem inneren Längskanal 24 ist eine Reinigungsvorrichtung 30 angeordnet, wie sie auch in Figur 2 einzeln abgebildet ist. Sie ist formmäßig so ausgestaltet, daß sie zwar in Längsrichtung der Längsführung (siehe Pfeile 32) innerhalb des inneren Längskanals 24 in beiden Richtungen verschoben werden kann, jedoch nicht quer hierzu. Dies wird dadurch erreicht, daß die Reinigungsvorrichtung 30 einerseits mit einem Reinigungsbereich 34, der federnde Lippen 36 aufweist, und andererseits mit einem Führungsbereich 38 an Führungsflächen 40, 42 der Schienen 20, 22 anliegt. Gleichzeitig

- 10 -

sind Reinigungsbereich 34 und Führungsbereich 38 so breit gewählt, daß die Reinigungsvorrichtung 30 einen gewissen, jedoch geringen Abstand von den Innenflächen der Seitenwände 44 der Innenschiene 22 hat.

Insgesamt ist daher die Reinigungsvorrichtung 30 dem rechteckförmigen Innenprofil des Längskanals 24 formmäßig angepaßt, auch ihr Profil (in Pfeilrichtung 32 gesehen), ist rechteckförmig. Der Führungsbereich 38 liegt weitgehend kraftlos an den Führungsflächen 40, 42 an, während die Lippen 36 mit einer Federkraft gegen die Führungsflächen 40, 42 drücken.

Entsprechend sind die Reinigungsvorrichtungen 30 für die beiden äußeren Längskanäle 25 ausgebildet, auch ihr Profil (in Pfeilrichtung 32 gesehen) entspricht dem in gleicher Blickrichtung betrachteten Profil der Führungsmittel 26, 28 desselben Längskanals 24, 25. Die Reinigungsvorrichtung nach Figur 3 hat eine einem Sektkorken ähnliche Form, jedoch ist ihr in der Darstellung hintenliegender Endbereich an der Lippe 36 ebenso ausgehöhlt, wie dies für den hinteren Endbereich der Reinigungsvorrichtung 30 in den Figuren 1 und 2 gezeigt ist, damit eine federnde Spreizbewegung der Lippen 36 nach außen möglich ist. Der Führungsbereich 38 hat eine kugelähnliche Form und als vorderen Endbereich eine Anlagefläche 46 für die Kugeln 28, eine entsprechende Anlagefläche 46 ist auch bei der Reinigungsvorrichtung nach Figur 2 vorgesehen. An ihr liegt beim praktischen Betrieb das jeweilige Führungsmittel 26, 28 an und überträgt seine Bewegung auf die Reinigungsvorrichtung 30, schiebt diese also durch den Längskanal 24, 25. Die endseitigen, außerhalb der Führungsmittel 26, 28 befindlichen Reinigungsvorrichtungen 30 werden durch Anschläge an den Schienen 20, 22 mitgenommen, wie dies aus Figur 6 beispielhaft ersichtlich ist, dort ist ein Anschlag 48 eingezeichnet.

Wie aus allen Figuren ersichtlich ist, liegen die Lippen 36 der Reinigungsbereiche 34 jeweils in einem sehr spitzen Winkel, der meist kleiner als zehn Grad ist, an den Führungsflächen 40, 42 an. Da diese Anlage elastisch ist, können die Lippen 36 einfedern und gleiten bei einer Verschiebebewegung in Gegenrichtung zu den Pfeilen 32 gegebenenfalls über Schmutzteilchen hinweg. Bei einer Bewegungsrichtung in Pfeilrichtung 32 wird jedoch ein derartiges Einfedern unterbunden, die Reinigungsvorrichtung 30 schiebt daher aufgefundenen Schmutz bevorzugt in Pfeilrichtung 32 innerhalb des Längskanals 24, 25, in Figur 1 also nach rechts.

In den Ausführungsbeispielen nach den Figuren 4 bis 6 sind Reinigungsvorrichtungen mit jeweils zwei, gegenständigen Reinigungsbereichen 34 gezeigt, bei denen zwischen den beiden Reinigungsbereichen 34 eine Kammer 50 vorhanden ist, in der sich aufgefundener Schmutz ansammeln kann. Demgemäß sind die spitzen Schabekanten der Lippen 36 jeweils nach innen gerichtet, so daß bei Bewegung der Reinigungsvorrichtungen 30 nach den Figuren 4 bis 6 der jeweils in Bewegungsrichtung vorn liegende Reinigungsbereich den Schmutz vorzugsweise überfährt und der in Bewegungsrichtung hinten liegende Reinigungsbereich 34 den Schmutz vor sich herschiebt und sammelt, wodurch er letztendlich in der Kammer 50 angehäuft wird. Diese kann mit Fett gefüllt sein, wodurch sie zugleich ein Reservoir für Schmierstoff bildet und in dem Maße, in dem Schmutz aufgenommen wird, Fett von ihr abgegeben wird. Zugleich bindet das Fett den aufgefundenen und gesammelten Schmutz. Vorzugsweise ist der Abstand zwischen den beiden gegenständigen Reinigungsbereichen

0182072

größer als der maximale Verschiebeweg der Reinigungsvorrichtung 30, so daß einmal angesammelter Schmutz nicht immer durch die Reinigungsbereiche 34 hin- und herbewegt wird. Beim Ausführungsbeispiel nach Figur 6 ist der Abstand zwischen den Reinigungsbereichen 34 so ausreichend gewählt, daß aufgefundener Schmutz sich in der Mitte zwischen den beiden Reinigungsbereichen 34 ungestört ansammeln kann. Das Ausführungsbeispiel nach Figur 4 ist zugleich ein Beispiel für die Benutzung eines Reinigungsbereichs 34 als Führungsbereich 38.

Im Ausführungsbeispiel nach Figur 6 dient die linke, relativ lange Reinigungsvorrichtung 30 zugleich als Abstandshalter der beiden eingezeichneten Kugeln 28. Entsprechend sind die Stirnflächen der Reinigungsvorrichtung 30 als Anlagefläche 46 für diese Kugeln 28 ausgeführt. Durch die rechte, kürzere Reinigungsvorrichtung 30 in Figur 6 soll angedeutet werden, daß sich außerhalb der Führungsmittel 26, 28 stets Reinigungsvorrichtungen befinden, damit auch der von den Führungsmitteln 26, 28 überstrichene Endbereich ihrer Bewegungslinien gereinigt werden kann und ein Austreten von Schmutz aus den offenen Stirnflächen der Längsführung unterbunden wird.

In Figur 7 ist schließlich eine Reinigungsvorrichtung 30 gezeigt, die auch Lippen 52 im Bereich der Anlagefläche 46 hat und dadurch geeignet ist, an der Kugel 28 haftenden Schmutz von dieser abzustreifen, zumindest auf der Kugeloberfläche so zu verschieben, daß der Schmutz in den Bereich der Führungsflächen 40, 42 gelangt. Die Lippen 52 liegen ringfömig am Rand der Anlagefläche 46 an der Kugel 28 an und begrenzen zwischen sich einen Hohlraum 54, der als Schmutzsammelkammer und/oder Fettvorratsbehälter dient.

- 10 -

Die Lippen 52 können auch in Gegenrichtung zur gezeigten Darstellung steil angestellt sein, damit - ähnlich wie bei den Ausführungsbeispielen nach den Figuren 4 bis 6 - sich der Schmutz im Zwischenbereich, also im Hohlraum 54 sammelt.

Vorzugsweise sind die Reinigungsvorrichtungen 30 aus Kunststoff ausgeführt. Sofern sie als längere Elemente, wie beispielsweise die linke Reinigungsvorrichtung 30 in Figur 6, ausgeführt sind, lassen sie sich auch aus Einzelelementen zusammenstecken. Eine Ausführung aus einem anderen Werkstoff als Kunststoff ist grundsätzlich möglich. Darüberhinaus können als Reinigungsvorrichtungen auch Schaumstoffkörper oder Filzkörper benutzt werden, die den Innenquerschnitt eines Längskanals 24, 26 ausfüllen und so ausreichend fest sind, daß sie von den Führungsmitteln 26, 28 mitgenommen werden können.

- 14 -

**DR. RER. NAT. WULF BAUER**
PATENTANWALT

WOLFGANG-MÜLLER-STRASSE 12
D-5000 KÖLN 51 (MARIENBURG)
H11 84/7 EPA

Anmelder:     Firma C. Rob. Hammerstein GmbH in
5650 Solingen 13

Bezeichnung: Längsführung für Fahrzeugsitze mit mindestens
einem Führungskanal

## Ansprüche

1.  Längsführung für Fahrzeugsitze mit einer Außenschiene (20) und einer in dieser verschiebbar geführten Innenschiene (22), die zwischen sich in Verschieberichtung verlaufende Längskanäle (24, 25) ausbilden, in denen Führungsmittel (26, 28), vorzugsweise Wälzkörper, angeordnet sind, die an Führungsflächen (40, 42) des Längskanals (24, 25) anliegen und über die sich die beiden Schienen (20, 22) gegeneinander abstützen, d a d u r c h  g e k e n n z e i c h n e t, daß sich in mindestens einem Längskanal (24, 25) eine Reinigungsvorrichtung (30) befindet, die in Längsrichtung des Längskanals (24, 25) verschiebbar in diesem untergebracht ist, mit den Führungsmitteln (26, 28) bewegungsverbunden ist, dem Innenprofil des Längskanals (24, 25) formmäßig angepaßt ist und an mindestens einer Führungsfläche (20 oder 22), vorzugsweise an beiden Führungsflächen (20, 22) des Längskanals (24 oder 25) elastisch anliegt.

2.  Längsführung nach Anspruch 1, dadurch gekennzeichnet, daß die Reinigungsvorrichtung (30) federnde und vorzugsweise in einer spitzen Reinigungskante auslaufende

- 2 -

Lippen (36) aufweist, die in einem sehr spitzen Winkel an einer Führungsfläche (40, 42) elastisch anliegen, wobei in einer Bewegungsrichtung die Lippen (36) beim Überfahren von Verunreinigungen einfedern können, in der anderen Bewegungsrichtung aber nicht.

3. Längsführung nach Anspruch 1 oder 2, dadurch gekennzeichnet, daß die Lippen (36) im Längsprofil V-förmig angeordnet sind.

4. Längsführung nach einem der Ansprüche 1 bis 3, dadurch gekennzeichnet, daß die Reinigungsvorrichtung (30) einen Führungsbereich (38) aufweist, der an den Führungsflächen (40, 42) leicht anliegt und eine gleichbleibende Ausrichtung der Reinigungsvorrichtung (30) innerhalb des Längskanals (24, 25) sichert.

5. Längsführung nach einem der Ansprüche 1 bis 4, dadurch gekennzeichnet, daß die Reinigungsvorrichtung (30) eine Anlagefläche (46) für ein Führungsmittel (26, 28), insbesondere einen Wälzkörper, aufweist.

6. Längsführung nach einem der Ansprüche 1 bis 5, dadurch gekennzeichnet, daß sich eine Reinigungsvorrichtung (30) zwischen zwei Führungsmitteln (26, 28), vorzugsweise Wälzkörpern, befindet und an ihren beiden Endbereichen jeweils eine Anlagefläche (46) aufweist.

7. Längsführung nach einem der Ansprüche 1 bis 6, dadurch gekennzeichnet, daß die Reinigungsvorrichtung (20) eine Kammer (50) für das Aufsammeln von Schmutz und/oder als Fettvorratskammer aufweist.

- 8 -

Hiervon ausgehend ist es Aufgabe der Erfindung, die beschriebenen Nachteile der bekannten Längsführung für Fahrzeugsitze zu vermeiden und die bekannte Längsführung dahingehend weiterzubilden, daß die Führungsflächen auch bei wiederholten, unter Belastung stattfindenden Längsverschiebungen frei von inneren und äußeren Partikelchen bleiben, die das Laufverhalten beeinträchtigen und zu einer Verschmutzung des Fahrzeugbodens unterhalb der Längsführung führen können.

Diese Aufgabe wird ausgehend von der bekannten Längsführung dadurch gelöst, daß sich in mindestens einem Längskanal eine Reinigungsvorrichtung befindet, die in Längsrichtung des Längskanals verschiebbar in diesem untergebracht ist, mit den Führungsmitteln bewegungsverbunden ist, dem Innenprofil des Längskanals formmäßig angepaßt ist und an mindestens einer Führungsfläche, vorzugsweise an beiden Führungsflächen, des Längskanals elastisch anliegt.

Diese Reinigungsvorrichtung bewegt sich bei einer Verschiebung der Schienen der Längsführung gegeneinander auf jeden Fall bezüglich einer Schiene, vorzugsweise gegenüber beiden Schienen und reinigt die Führungsflächen, indem sie den auf den Führungsflächen befindlichen Schmutz bei der Relativbewegung vor sich herschiebt. Sie ist dabei vorzugsweise so ausgebildet, daß sie in einer Bewegungsrichtung über den Schmutz gleitet und in der anderen Bewegungsrichtung den Schmutz vor sich herschiebt, so daß der Schmutz stets in dieselbe Richtung transportiert wird. Dies kann vorteilhaft dazu ausgenutzt werden, den Schmutz in speziell vorgesehenen, abgeschlossenen Kammern zu sammeln, aus denen er nicht wieder austreten kann. Damit ist verhindert, daß der von der Reinigungsvorrichtung zusammengeschobene Schmutz aus den Längskanälen austreten und auf den Fahrzeugboden fallen kann.

Auf Grund der elastischen Anlage drückt die Reinigungsvorrichtung mit einer gewissen Auflagekraft gegen die Führungsflächen und schiebt auch sehr feinen Schmutz zur Seite. Da die Reinigungsvorrichtung mit den Führungsmitteln
bewegungsverbunden ist, überstreicht sie denselben Verschiebeweg wie die Führungsmittel, jedoch an einer anderen
Stelle als letztere. Um eine ausreichende Reinigung der
Führungsflächen zu erreichen, sind daher vor und hinter
den Führungsmitteln jeweils Reinigungsvorrichtungen angeordnet, wodurch der von den Führungsmitteln überstrichene
Verschiebeweg auf seiner gesamten Länge gereinigt wird.
Die Reinigungsvorrichtungen befinden sich somit auch außerhalb der Führungsmittel, dadurch werden auch diejenigen
Bereiche der Schienen gesäubert und reingehalten, die bei
einer Verschiebung der Schienen gegeneinander jeweils überstehen und damit frei zugänglich sind. Gerade an diesen
überstehenden Bereichen und den endseitig offenen Stirnflächen der Längsführung besteht die Gefahr, daß Schmutz eindringen oder aus der Längsführung herausfallen kann.

Vorzugsweise besteht die Reinigungsvorrichtung aus einem
Reinigungsbereich, der elastisch an mindestens einer Führungsfläche anliegt, und aus einem Führungsbereich, der
sicherstellt, daß sich die Reinigungsvorrichtung nicht quer
zur Verschieberichtung der Längsführung innerhalb des
Längskanals bewegen kann. Dieser Führungsbereich kann seinerseits wieder als Reinigungsbereich ausgebildet sein.

Vorzugsweise hat die Reinigungsvorrichtung eine Anlagefläche für einen Wälzkörper, insbesondere eine Kugel oder eine
Rolle. Hierdurch wird die Bewegung der Wälzkörper auf die
Reinigungsvorrichtung übertragen. Andererseits wirkt die
Reinigungsvorrichtung bei entsprechender Ausbildung als

FIG.1

FIG. 4

FIG.2

FIG.5

FIG.3

FIG. 7

FIG. 6